# EUROPÄISCHE PATENTSCHRIFT

(11) **EP 2 173 457 B1**
(45) Veröffentlichungstag und Bekanntmachung des Hinweises auf die Patenterteilung: **28.10.2015**
(21) Anmeldenummer: 08775230.9
(22) Anmeldetag: 21.07.2008
(51) Int. Cl.: B01D 46/24, B01D 46/52

(54) **GASFILTEREINRICHTUNG**
GAS FILTER DEVICE
DISPOSITIF DE FILTRATION DE GAZ

(30) Priorität: 25.07.2007 DE 102007035225
(43) Veröffentlichungstag der Anmeldung: 14.04.2010
(73) Patentinhaber: Mahle International GmbH, 70376 Stuttgart (DE)
(72) Erfinder: HÖFLEIN, Joachim, 74214 Schöntal (DE); PÜTTMANN, Herbert, 74639 Zweiflingen (DE)
(74) Vertreter: BRP Renaud & Partner mbB Rechtsanwälte Patentanwälte Steuerberater
(86) Internationale Anmeldenummer: PCT/EP2008/059501
(87) Internationale Veröffentlichungsnummer: WO 2009/013257

(56) Entgegenhaltungen:
- EP-A- 1 428 565
- WO-A-2005/014159
- DE-A1- 4 406 124
- DE-C1- 19 854 704

## Beschreibung

Die vorliegende Erfindung betrifft eine Gasfiltereinrichtung, insbesondere ein Staubfilter, mit den Merkmalen des Oberbegriffs des Anspruchs 1.

Aus der DE 44 06 124 A1 ist eine Gasfiltereinrichtung bekannt, die einen Filterkörper aufweist, dessen Filtermaterial im Querschnitt des Filterkörpers ringförmig angeordnet ist und in dem zwei Rotationsdüsen zum Rückspülen des Filtermaterials um eine Längsmittelachse des Filterkörpers drehbar angeordnet sind. Ferner umfasst die Gasfiltereinrichtung einen Filterträger, an dem der jeweilige Filterkörper im Einbauzustand an einem axialen Ende befestigt ist. Der Filterträger weist eine mit dem Innenraum des Filterkörpers kommunizierende, reinseitige Auslassöffnung auf, sowie einen Druckanschluss zur Versorgung der jeweiligen Rotationsdüse mit einem Rückspülgas.

Bei der bekannten Gasfiltereinrichtung umfasst der Druckanschluss ein lanzenartiges Rohr, das sich konzentrisch im Innenraum des Filterkörpers erstreckt und an dem die jeweilige Rotationsdüse drehbar gelagert ist. Über das Rohr wird die jeweilige Rotationsdüse mit dem Rückspülgas versorgt. Zum Wechseln des Filterkörpers, was beispielsweise bei einem Verschleiß des Filtermaterials erforderlich werden kann, muss bei der bekannten Gasfiltereinrichtung der Filterkörper axial über die gesamte Länge des Rohrs abgezogen werden. Je nach axialer Länge des Filterkörpers ist hierzu ein sehr großer Bauraum erforderlich.

Aus der WO 2005/014159 A1 ist eine Granulaterzeugungsvorrichtung mit einer Gasfiltereinrichtung bekannt, wobei die Gasfiltereinrichtung einen Filterkörper aufweist, dessen Filtermaterial im Querschnitt des Filterkörpers ringförmig angeordnet ist und in dem wenigstens eine Rotationsdüse zum Rückspülen des Filtermaterials um eine Längsmittelachse des Filterkörpers drehbar angeordnet ist. Ferner ist ein Filterträger vorgesehen, an dem der jeweilige Filterkörper im Einbauzustand an einem axialen Ende befestigt ist und der einen Druckanschluss zur Versorgung der jeweiligen Rotationsdüse mit einem Rückspülgas aufweist. Außerdem ist eine Kupplungseinrichtung vorgesehen, die an einem mit der jeweiligen Rotationsdüse kommunizierend verbundenen, am Filterkörper angeordneten Anschlussstutzen eine ringförmige Sitzfläche aufweist, wobei die Kupplungseinrichtung eine am Druckanschluss angeordnete, im Querschnitt ringförmige Kupplungshülse aufweist, die im Einbauzustand an der Sitzfläche anliegt. Bei der bekannten Filtereinrichtung besitzt die Kupplungshülse eine konische Außenseite, während der Anschlussstutzen eine dazu komplementäre konische Innenseite aufweist. Im verbundenen Zustand greift die Kupplungshülse axial in den Anschlussstutzen ein, so dass die konischen Flächen aneinander anliegen und sich gegenseitig zentrieren.

Weitere Filtereirichtungen sind aus der DE 198 54 704 C1 und der EP 1 428 565 A bekannt.

Hier setzt die vorliegende Erfindung an. Die Erfindung beschäftigt sich mit dem Problem, für eine Gasfiltereinrichtung der eingangs genannten Art eine verbesserte Ausführungsform anzugeben, die sich insbesondere dadurch auszeichnet, dass der für die Montage und Demontage erforderliche Bauraum reduziert ist.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, für die Versorgung der jeweiligen Rotationsdüse mit dem Rückspülgas eine Kupplungseinrichtung vorzusehen, die eine am Filterkörper angeordnete Sitzfläche und eine damit zusammenwirkende, am Filterträger angeordnete Kupplungshülse umfasst. Durch diese Bauweise wird innerhalb des Rückspülsystems eine Trennung in zwei Baugruppen realisiert, nämlich einerseits in eine Baugruppe, welche die am Filterträger angeordneten Komponenten umfasst und eine Baugruppe, welche die am bzw. im Filterkörper angeordneten Komponenten umfasst. Zum Montieren und Demontieren des Filterkörpers ist somit nur noch ein vergleichsweise kleiner Bauraum erforderlich, da es im Grunde ausreicht, den Filterkörper axial vom Filterträger abzuheben, um ihn dann zusammen mit der darin verbleibenden Baugruppe des Spülsystems radial entfernen zu können. Anschließend kann die am Filterkörper angeordnete Baugruppe des Rückspülsystems vom Filterkörper entfernt werden. Der zum Wechseln des Filterkörpers erforderliche Bauraum kann dadurch erheblich reduziert werden. Erfindungsgemäß ist vorgesehen, dass der Filterträger eine mit einem Innenraum des Filterkörpers kommunizierende, reinseitige Auslassöffnung aufweist, und dass die Sitzfläche des Anschlussstutzens axial ist und sich orthogonal zur Längsmittelachse des Filterkörpers eben erstreckt, so dass die Kupplungshülse im Einbauzustand an der Sitzfläche axial anliegt.

Gemäß einer vorteilhaften Ausführungsform können die Sitzfläche und die Kupplungshülse so aufeinander abgestimmt sein, dass die Kupplungshülse relativ zur Sitzfläche in einer Ebene, in welcher sich die Sitzfläche erstreckt, radial verschiebbar ist. Durch diese relative Verschiebbarkeit zwischen Sitzfläche und Kupplungshülse können Lagetoleranzen zwischen Filterkörper und Filterträger ausgeglichen werden.

Zusätzlich oder alternativ kann gemäß einer anderen vorteilhaften Ausführungsform die Kupplungshülse an einem am Druckanschluss des Filterträgers angeordneten Kupplungsstutzen axial verstellbar angeordnet sein. Hierdurch lässt sich die Sitzfläche mit daran anliegender Kupplungshülse relativ zum Kupplungsstutzen axial verstellen. Hierdurch können axiale Lagetoleranzen zwischen dem Filterkörper und dem Filterträger ausgeglichen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine teilweise geschnittene Seitenansicht einer Gasfiltereinrichtung im Einbauzustand,
- Fig. 2: eine vergrößerte Darstellung der Gasfiltereinrichtung im Bereich einer Kupplungseinrichtung, während der Montage bzw. Demontage,
- Fig. 3: ein vergrößertes Detail III aus Fig. 1 im Bereich der Kupplungseinrichtung,
- Fig. 4: ein vergrößertes Detail IV aus Fig. 1 im Bereich einer Lagerung zwischen einer Rotationsdüse und einem Filterkörper.

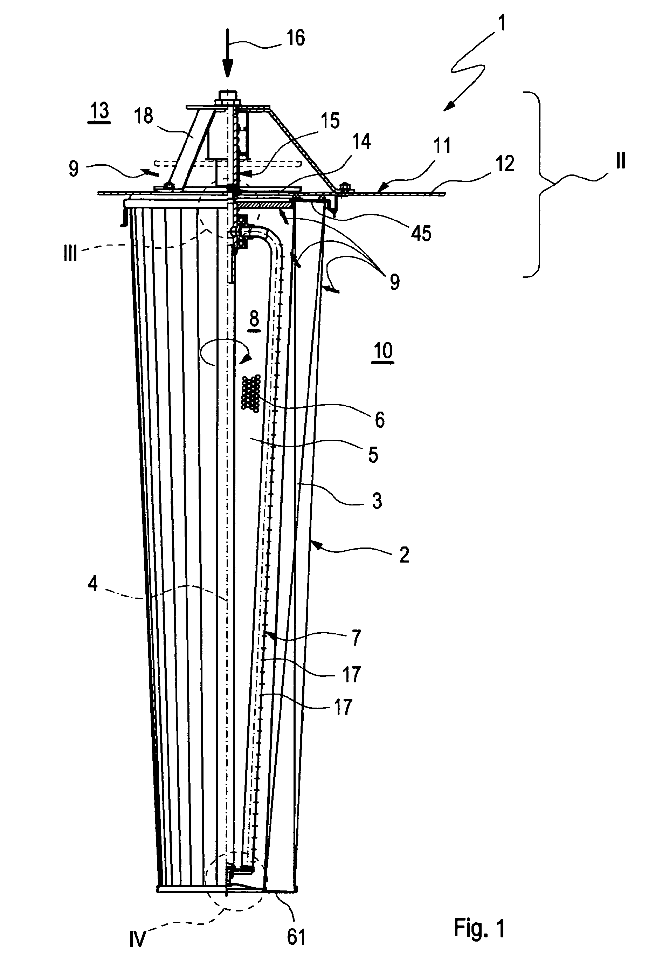

Entsprechend Fig. 1 umfasst eine Gasfiltereinrichtung 1, bei der es sich bevorzugt um ein Staubfilter handeln kann und das bevorzugt bei stationären, industriellen Anwendungen Verwendung findet, zumindest einen Filterkörper 2, dessen Filtermaterial 3 in einem quer zur Längsmittelachse 4 des Filterkörpers 2 verlaufenden Querschnitt des Filterkörpers 2 ringförmig angeordnet ist. Dementsprechend bildet der Filterkörper 2 ein Ringfilterelement. Im Beispiel besitzt der Filterkörper 2 eine konische Gestalt, so dass er ein kegelstumpfförmiges Filterelement bildet. Alternativ kann der Filterkörper 2 auch eine zylindrische Gestalt mit in axialer Richtung konstantem Querschnitt aufweisen. Das Filtermaterial 3 kann in herkömmlicher Weise gefaltet oder plissiert sein und kann außerdem radial innen durch eine perforierte Zarge 5 radial abgestützt sein. Eine Perforation 6 dieser Zarge 5 ist in Fig. 1 durch eine Anordnung mehrerer Löcher angedeutet.

Die Gasfiltereinrichtung 1 umfasst außerdem zumindest eine Rotationsdüse 7, die in einen Innenraum 8 des Filterkörpers 2 um die Längsmittelachse 4 drehbar angeordnet ist. Die Rotationsdüse 7 dient zum Rückspülen des Filtermaterials 3. Dementsprechend ist das Filtermaterial 3 im normalen Filterbetrieb der Gasfiltereinrichtung 1 radial von außen nach innen durchströmt. Eine entsprechende Durchströmung ist in Fig. 1 durch Pfeile 9 angedeutet. Somit trennt der Filterkörper 2 eine rohseitige Umgebung 10 von seinem reinseitigen Innenraum 8. Im Beispiel ist nur eine Rotationsdüse 7 vorhanden oder erkennbar. Es ist klar, dass grundsätzlich auch zwei oder mehr Rotationsdüsen 7 im Innenraum 8 des Filterkörpers 2 angeordnet sein können, wobei diese Rotationsdüsen 7 dann in Umfangsrichtung zweckmäßig gleichmäßig verteilt angeordnet sind.

Die Gasfiltereinrichtung 1 weist ferner einen Filterträger 11 auf, der zur Befestigung des jeweiligen Filterkörpers 2 dient. Der Filterträger 11 ist z.B. durch eine Platte 12 gebildet oder weist beispielsweise eine Platte 12 auf, die den Rohraum 10 von einem Reinraum 13 trennt. Der Filterträger 11 bzw. seine Platte 12 besitzt eine reinseitige Auslassöffnung 14, die bei montiertem Filterkörper 2 mit dem Innenraum 8 kommuniziert. Der Filterkörper 2 besitzt außerdem in üblicher Weise eine axialwirkende, ringförmig geschlossen umlaufende Dichtung 53, mit welcher der Filterkörper 2 im Einbauzustand an der Platte 12 des Filterträgers 11 axial zur Anlage kommt, um dadurch den Rohraum 10 vom Reinraum 13 zu trennen.

Am Filterträger 11 ist außerdem ein Druckanschluss 15 ausgebildet, der zur Versorgung der jeweiligen Rotationsdüse 7 mit einem geeigneten Rückspülgas dient. Als geeignetes Rückspülgas kommt beispielsweise das mit Hilfe des Filterkörpers 2 gereinigte Gas in Frage. Im Rückspülbetrieb wird der jeweiligen Rotationsdüse 7 über den Druckanschluss 15 das Spülgas entsprechend einem Pfeil 16 zugeführt, das an der Rückspüldüse 7 über eine Vielzahl von Düsenlöchern 17 austritt und dabei das Filtermaterial 3 radial von innen beaufschlagt. Die Düsenlöcher 17 können dabei eine gegenüber der Radialrichtung in der Umfangsrichtung geneigte Orientierung aufweisen, wodurch sich nach dem Rückstoßprinzip ein Vorschub für die Rotationsdüse 7 ergibt. Dementsprechend kann die Rotationsdüse 7 beim Rückspülen um die Längsmittelachse 4 rotieren. Hierdurch kann die gesamte Innenfläche des Filtermaterials 3 mit Spülgas beaufschlagt werden. Es ist klar, dass sich die Rotationsdüse 7 hierzu im wesentlichen über die gesamte axiale Länge des Filtermaterials 3 erstreckt.

Zur Halterung des Druckanschlusses 15 ist der Filterträger 11 hier mit einem Haltegestell 18 ausgestattet, das beispielsweise als Dreibein ausgestaltet sein kann.

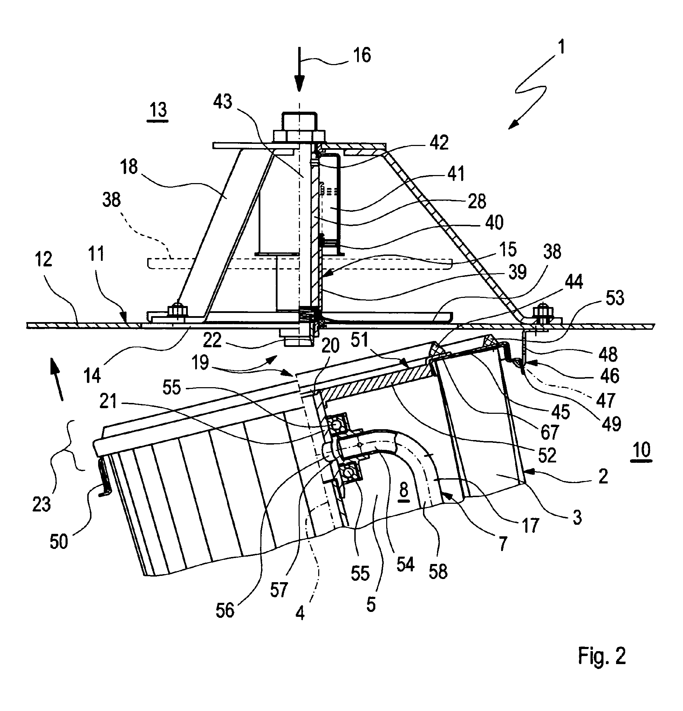

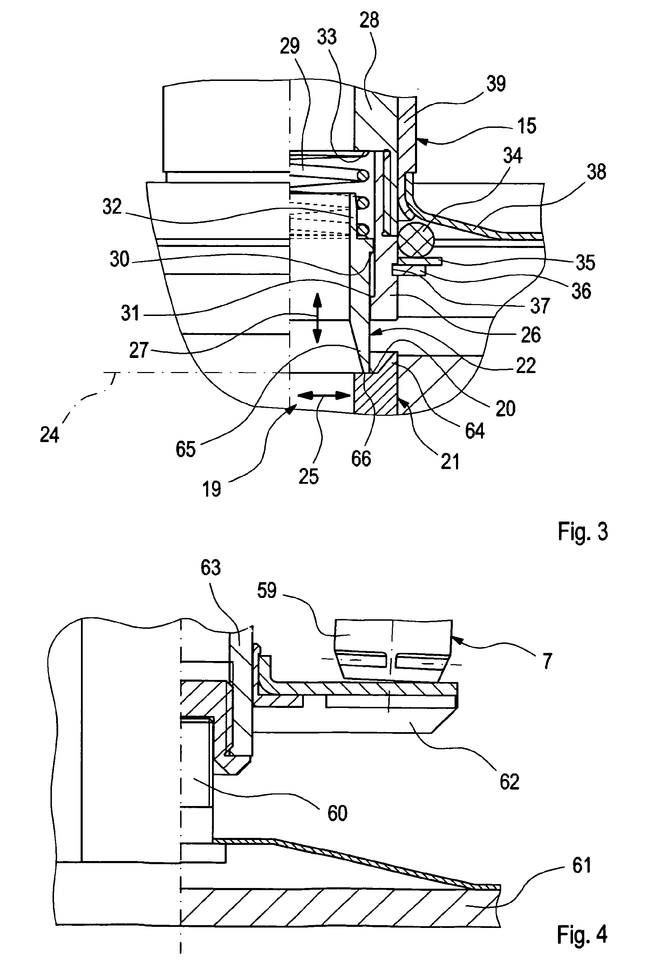

Entsprechend den Fig. 2 und 3 umfasst die Gasfiltereinrichtung 1 außerdem eine Kupplungseinrichtung 19, die eine Trennung bzw. eine Verbindung filterträgerseitiger Komponenten des Rückspülsystems mit filterkörperseitigen Komponenten des Rückspülsystems ermöglicht. Die Kupplungseinrichtung 19 umfasst eine axial orientierte Sitzfläche 20, die ringförmig ausgestaltet ist und die an einem Anschlussstutzen 21 ausgebildet ist. Besagter Anschlussstutzen 21 ist seinerseits am Filterkörper 2 angeordnet und kommuniziert mit der jeweiligen Rotationsdüse 7. Ferner weist die Kupplungseinrichtung 19 eine Kupplungshülse 22 auf, die einen ringförmigen Querschnitt besitzt und die im eingebauten Zustand axial an der Sitzfläche 20 zur Anlage kommt. Die Kupplungshülse 22 ist am Druckanschluss 15 angeordnet.

Gemäß der hier gezeigten bevorzugten Ausführungsform liegt die Sitzfläche 20 axial innerhalb eines durch eine geschweifte Klammer gekennzeichneten axialen Endabschnitts 23 des Filterkörpers 2. Besagter axialer Endabschnitt 23 umfasst das im Einbauzustand am Filterträger 11 befestigte axiale Ende des Filterkörpers 2. Ferner ist die Sitzfläche 20 bevorzugt eben ausgestaltet. Insbesondere steht die Sitzfläche 20 in axialer Richtung nicht über den Filterkörper 2 vor.

Gemäß Fig. 3 können die Sitzfläche 20 und die Kupplungshülse 22 so aufeinander abgestimmt sein, dass grundsätzlich eine radiale Verschiebbarkeit zwischen der Kupplungshülse 22 und der Sitzfläche 20 in einer Ebene 24 gegeben ist, wobei sich in dieser Ebene 24 die Sitzfläche 20 erstreckt. Durch die so geschaffene Möglichkeit einer radialen Beweglichkeit zwischen den aneinander anliegenden Komponenten können radiale Lagetoleranzen zwischen dem Filterkörper 2 und dem Filterträger 11 ausgeglichen werden. Ein entsprechender Radialausgleich bzw. eine entsprechende radiale Beweglichkeit ist in Fig. 3 durch einen Doppelpfeil 25 angedeutet.

Bevorzugt ist die hier gezeigte Ausführungsform, bei welcher die Kupplungshülse 22 an einem Kupplungsstutzen 26 axial verstellbar angeordnet ist. Eine entsprechende axiale Verstellbarkeit ist in Fig. 3 durch einen Doppelpfeil 27 angedeutet. Durch diese axiale Verstellbarkeit lassen sich axiale Lagetoleranzen zwischen dem Filterkörper 2 und dem Filterträger 11 ausgleichen. Der Kupplungsstutzen 26 ist seinerseits an Druckanschluss 15 angeordnet. Beispielsweise ist der Kupplungsstutzen 26 in eine axiale Stirnseite eines Rohrkörpers 28 des Druckanschlusses 15 eingeschraubt. Vorzugsweise kann eine Vorspannfeder 29 vorgesehen sein, die im eingebauten Zustand die Kupplungshülse 22 gegen die Sitzfläche 20 axial antreibt. Hierzu ist die Vorspannfeder 29 zweckmäßig als Druckfeder ausgestaltet, die sich einenends an der Kupplungshülse 22 und anderenends hier am Rohrkörper 28 axial abstützt. Hierzu ist die Kupplungshülse 22 im vorliegenden Fall koaxial im Kupplungsstutzen 26 angeordnet. Durch Stufen 30 bzw. 31 am Kupplungsstutzen 26 bzw. an der Kupplungshülse 22 ergibt sich ein axialer Endanschlag für die axiale Verstellbarkeit zwischen Kupplungshülse 22 und Kupplungsstutzen 26. Im Bereich der Vorspannfeder 29 besitzt die Kupplungshülse 22 hier außerdem einen Ringkragen 32, der die Vorspannfeder 29 zentriert und der in der Gegenrichtung ebenfalls einen Endanschlag ausbilden kann, in dem er mit einer Stufe 33 axial zusammenwirkt, die am Rohrkörper 28 ausgebildet ist.

Vorzugsweise kann der Kupplungsstutzen 26 radial außen einen axial wirkenden Dämpfungsring 34 tragen. Beispielsweise stützt sich der Dämpfungsring 34 über eine Distanzscheibe 35 an einem Ring 36 axial ab, der radial in eine Umfangsnut 37 eingreift, die am Außenumfang des Kupplungsstutzens 26 ausgebildet ist. Der Dämpfungsring 34 dient hier dazu, eine Stauplatte 38 in ihrer unteren Endlage dämpfend abzustützen.

Entsprechend Fig. 2 ist diese Stauplatte 38 über eine Hülse 39 mit einem Kolben 40 antriebsverbunden, der in einem Zylinder 41 axial verstellbar angeordnet ist. Die Hülse 39 ist dabei radial außen am Rohrkörper 28 des Druckanschlusses 15 axial verstellbar gelagert. Der Zylinderraum 41 kommuniziert z.B. über wenigstens eine Bohrung 42 mit einem Inneren 43 des Rohrkörpers 28. Bei einer Druckbeaufschlagung des Druckanschlusses 15 steigt der Druck im Inneren 43 und über die wenigstens eine Bohrung 42 auch im Zylinderraum 41, wodurch der Kolben 40 ausgetrieben, also axial verstellt wird. Hierdurch wird die Stauplatte 38 von der mit unterbrochener Linie schwach angedeuteten oberen Endlage in die mit ausgezogener Linie dargestellte untere Endlage überführt, in welcher die Stauplatte 38 dazu dient, die Auslassöffnung 14 des Filterträgers 11 zu verschließen.

Hierzu liegt die Stauplatte 38 vorzugsweise an einer Ringdichtung 44 axial an, die an einem Zentrierring 67 angebracht ist, der sich an einer axialen Endscheibe 45 des Filterkörpers 2 abstützt. Gleichzeitig kommt die Stauplatte 38 in dieser Schließstellung am Dämpfungsring 34 axial zur Anlage.

Entsprechend Fig. 2 kann der Filterkörper 2 bevorzugt über eine Aufhängung 46 um eine Schwenkachse 47, die sich quer zur Längsmittelachse 4 des Filterkörpers 2 erstreckt, schwenkbar am Filterträger 11 gehalten sein. Eine derartige Schwenkbewegung wird unter anderem auch durch die Kupplungseinrichtung 19 ermöglicht, da die Kupplungseinrichtung nicht mit einer Steckverbindung arbeitet, sondern mit einer rein axial wirkenden Verbindung. Insbesondere ragt die Kupplungshülse 22 nicht oder nur unwesentlich in axialer Richtung über den Filterträger 11 vor, wodurch sich im montierten Zustand im wesentlichen keine oder nur eine geringfügige axiale Überlappung oder Einbringtiefe zwischen Kupplungshülse 22 und Sitzfläche 20 ergibt.

Die Aufhängung 46 kann beispielsweise einen am Filterträger 11 befestigten Haken 48 aufweisen, an dem ein entsprechender Gegenhaken 49 des Filterkörpers 2, der beispielsweise an der genannten Endscheibe 45 befestigt sein kann, eingreift. Diametral gegenüber dieser Aufhängung 46 kann zumindest eine geeignete Fixierung 50 ausgebildet sein, die eine lösbare Festlegung des Filterkörpers 2 im Einbauzustand am Filterträger 11 ermöglicht. Ebenso können mehrere, bevorzugt zwei solche Fixierungen vorgesehen sein. Bevorzugt ist die hier gezeigte hängende Anordnung des Filterkörpers 2, bei welcher der Filterkörper 2 eine vertikal orientierte Längsmittelachse 4 besitzt. Denkbar ist jedoch auch eine liegende Anordnung mit horizontal orientierter Längsmittelachse 4.

Im Bereich des Endabschnitts 23 weist der Filterkörper 2 außerdem eine Halterung 51 auf, die sternförmig ausgestaltet sein kann und die zur Fixierung des Anschlussstutzens 21 im beziehungsweise am Filterkörper 2 dient. Die Halterung 51 weist hierzu mehrere, insbesondere sternförmig angeordnete Stege 52 auf, an denen radial innen der Anschlussstutzen 21 abgestützt ist und die radial außen am Zentrierring 67 befestigt sind und sich über diesen an der Endscheibe 45 abstützen. Dabei kann die Halterung 51 lösbar an der Endscheibe 45 angebracht sein, zum Beispiel kann die Halterung 51 mit Hilfe des Zentrierrings 67 lediglich gesteckt sein. Hierdurch ist grundsätzlich die komplette filterkörperseitige Baugruppe, bestehend aus Komponenten des Rückspülsystems, einfach aus dem Filterkörper 2 herausnehmbar beziehungsweise in den Filterkörper 2 einsetzbar.

Gemäß Fig. 2 ist die wenigstens eine Rotationsdüse 7 in einem ersten Endbereich 54, der im Einbauzustand dem Filterträger 11 zugewandt ist, am Anschlussstutzen 21 drehbar gelagert. Entsprechende Radiallager sind hier mit 55 bezeichnet. Der Anschlussstutzen 21 enthält zumindest eine radiale Verbindungsöffnung 56, die mit einem Ringraum 57 kommuniziert, mit dem ein Rohrkörper 58 der Rotationsdüse 7 kommuniziert.

Entsprechend Fig. 4 ist die wenigstens eine Rotationsdüse 7 in einem zweiten Endbereich 59, der im Einbauzustand vom Filterträger 11 abgewandt ist, an einem Lagerzapfen 60 drehbar gelagert und axial abgestützt. Dieser Lagerzapfen 60 ist dabei an einer anderen Endscheibe 61 des Filterkörpers 2 abgestützt, die das dem zweiten Endbereich 59 der jeweiligen Rotationsdüse 7 zugeordnete Ende des Filterkörpers 2 axial verschließt. Diese hier unten dargestellte Endscheibe 61 ist dabei eine sogenannte geschlossene Endscheibe, die in axialer Richtung insbesondere einen kreisförmigen Querschnitt aufweist, während die in Fig. 1 oben dargestellte Endscheibe 45 als sogenannte offene Endscheibe ausgestaltet ist, die in axialer Richtung einen ringförmigen Querschnitt besitzt. Im Beispiel stützt sich der zweite Endbereich 59 der jeweiligen Rotationsdüse 7 an einem Träger 62, z.B. eine Strebe, axial ab, der radial innen an einer rohrförmigen Lanze 63 angeordnet ist. Die Lanze 63 ist axial auf den Lagerzapfen 60, insbesondere lösbar, aufgesteckt. Ferner ist die Lanze 63 an ihrem anderen Ende in den Anschlussstutzen 21, insbesondere lösbar, axial eingesteckt.

Gemäß Fig. 3 kann die Sitzfläche 20 radial außen einen Ringkragen 64 aufweisen, der axial von der übrigen Sitzfläche 20 absteht. Hierdurch bildet der Ringkragen 64 eine umfangsmäßige Einfassung für die Sitzfläche 20. Dieser Ringkragen 64 charakterisiert sich durch einen Innenquerschnitt, der mit zunehmendem Axialabstand von der Sitzfläche 20 zunimmt. Hierdurch ergibt sich eine zentrierende Wirkung für das Zusammenspiel zwischen Sitzfläche 20 mit Ringkragen 64 und der Kupplungshülse 22. Zusätzlich oder optional kann die Kupplungshülse 22 so ausgestaltet sein, dass sie einen Endabschnitt 65 besitzt, der bis zu einem axialen Ende 66 einen abnehmenden Querschnitt aufweist. Mit dem Ende 66 liegt die Kupplungshülse 22 axial an der Sitzfläche 20 an. Durch den sich verjüngenden Endabschnitt 65 wird der Innenquerschnitt der Kupplungshülse 22 in Richtung zum Ende 66 vergrößert, wodurch die radiale Verstellbarkeit zwischen Kupplungshülse 22 und Sitzfläche 20 vergrößert ist.

## Patentansprüche

1. Gasfiltereinrichtung, insbesondere Staubfilter,
- mit mindestens einem Filterkörper (2), dessen Filtermaterial (3) im Querschnitt des Filterkörpers (2) ringförmig angeordnet ist und in dem wenigstens eine Rotationsdüse (7) zum Rückspülen des Filtermaterials (3) um eine Längsmittelachse (4) des Filterkörpers (2) drehbar angeordnet ist,
- mit wenigstens einem Filterträger (11), an dem der jeweilige Filterkörper (2) im Einbauzustand an einem axialen Ende befestigt ist und der einen Druckanschluss (15) zur Versorgung der jeweiligen Rotationsdüse (7) mit einem Rückspülgas aufweist,
- wobei eine Kupplungseinrichtung (19) vorgesehen ist, die an einem mit der jeweiligen Rotationsdüse (7) kommunizierend verbundenen, am Filterkörper (2) angeordneten Anschlussstutzen (21) eine ringförmige Sitzfläche (20) aufweist,
- wobei die Kupplungseinrichtung (19) eine am Druckanschluss (15) angeordnete, im Querschnitt ringförmige Kupplungshülse (22) aufweist, die im Einbauzustand an der Sitzfläche (20) anliegt,
**dadurch gekennzeichnet,**
- **dass** der Filterträger (11) eine mit einem Innenraum (8) des Filterkörpers (2) kommunizierende, reinseitige Auslassöffnung (14) aufweist,
- **dass** die Sitzfläche (20) des Anschlussstutzens (21) axial ist und sich orthogonal zur Längsmittelachse (4) des Filterkörpers (2) eben erstreckt, so dass die Kupplungshülse (22) im Einbauzustand an der Sitzfläche (20) axial anliegt.

2. Gasfiltereinrichtung nach Anspruch 1,
**dadurch gekennzeichnet,**
**dass** die Sitzfläche (20) axial innerhalb eines axialen Endabschnitts (23) des Filterkörpers (2) liegt.

3. Gasfiltereinrichtung nach Anspruch 1 oder 2,
**dadurch gekennzeichnet,**
**dass** die Sitzfläche (20) und die Kupplungshülse (22) so aufeinander abgestimmt sind, dass die Kupplungshülse (22) relativ zur Sitzfläche (20) in einer Ebene (24), in welcher sich die Sitzfläche (20) erstreckt, radial verschiebbar ist.

4. Gasfiltereinrichtung nach einem der Ansprüche 1 bis 3,
**dadurch gekennzeichnet,**
**dass** die Kupplungshülse (22) an einem am Druckanschluss (15) angeordneten Kupplungsstutzen (26) axial verstellbar angeordnet ist.

5. Gasfiltereinrichtung nach Anspruch 4,
**dadurch gekennzeichnet,**
**dass** die Kupplungshülse (22) mit einer Vorspannfeder (29) axial gegen die Sitzfläche (20) angetrieben ist.

6. Gasfiltereinrichtung nach Anspruch 4 oder 5,
**dadurch gekennzeichnet,**
**dass** die Kupplungshülse (22) koaxial im Kupplungsstutzen (26) angeordnet ist.

7. Gasfiltereinrichtung nach einem der Ansprüche 1 bis 6,
**dadurch gekennzeichnet,**
**dass** der Kupplungsstutzen (26) radial außen einen axial wirkenden Dämpfungsring (34) trägt.

8. Gasfiltereinrichtung nach einem der Ansprüche 1 bis 7,
**dadurch gekennzeichnet,**
**dass** der Filterkörper (2) über eine Aufhängung (46) um eine quer zur Längsmittelachse (4) des Filterkörpers (2) verlaufende Schwenkachse (47) schwenkbar am Filterträger (11) gehalten ist.

9. Gasfiltereinrichtung nach einem der Ansprüche 1 bis 8,
**dadurch gekennzeichnet,**
**dass** der Filterkörper (2) an seinem, im Einbauzustand dem Filterträger (11) zugewandten axialen Ende eine sternförmige Halterung (51) für den Anschlussstutzen (21) aufweist.

10. Gasfiltereinrichtung nach einem der Ansprüche 1 bis 9,
**dadurch gekennzeichnet,**
**dass** die wenigstens eine Rotationsdüse (7) in einem im Einbauzustand dem Filterträger (11) zugewandten Endbereich (54) am Anschlussstutzen (21) drehbar gelagert ist.

11. Gasfiltereinrichtung nach einem der Ansprüche 1 bis 10,
**dadurch gekennzeichnet,**
**dass** die wenigstens eine Rotationsdüse (7) in einem im Einbauzustand vom Filterträger (11) abgewandten Endbereich (59) an einem Lagerzapfen (60) drehbar axial abgestützt ist, der an einer das zugehörige Ende des Filterkörpers (2) axial verschließenden Endscheibe (61) angeordnet ist.

12. Gasfiltereinrichtung nach einem der Ansprüche 1 bis 11,
**dadurch gekennzeichnet,**
**dass** die Sitzfläche (20) radial außen von einem radial abstehenden Ringkragen (64) eingefasst ist, der einen mit zunehmendem Axialabstand von der Sitzfläche (20) zunehmenden Innenquerschnitt aufweist.

13. Gasfiltereinrichtung nach einem der Ansprüche 1 bis 12,
**dadurch gekennzeichnet,**
**dass** die Kupplungshülse (22) einen sich zu einem im Einbauzustand an der Sitzfläche (20) axial anliegenden axialen Ende (66) verjüngenden Endabschnitt (65) aufweist.

14. Filterkörper für eine Gasfiltereinrichtung (1) nach einem der Ansprüche 1 bis 13.

## Claims

1. Gas filter device, in particular a dust filter,
- comprising at least one filter body (2), the filter material (3) of which is arranged annularly in the cross section of the filter body (2) and in which at least one rotary nozzle (7) for backwashing the filter material (3) is arranged rotatably about a longitudinal central axis (4) of the filter body (2),
- comprising at least one filter support (11) on which the respective filter body (2) is fastened to an axial end in the installed state and which has a pressure connection (15) for supplying the respective rotary nozzle (7) with a backwashing gas,
- a coupling device (19) being provided which has an annular seat (20) on a connection piece (21) which is arranged on the filter body (2) and is in communication with the respective rotary nozzle (7),
- the coupling device (19) having a coupling sleeve (22) which is annular in cross section, arranged on the pressure connection (15) and bears on the seat (20) in the installed state,
**characterised in that**
- the filter support (11) has a clean-side outlet opening (14) which is in communication with an inner space (8) of the filter body (2),
- the seat (20) of the connection piece (21) is axial and extends in a planar manner orthogonally to the longitudinal central axis (4) of the filter body (2) such that the coupling sleeve (22) bears axially on the seat (20) in the installed state.

2. Gas filter device according to claim 1, **characterised in that** the seat (20) lies axially within an axial end portion (23) of the filter body (2).

3. Gas filter device according to either claim 1 or claim 2, **characterised in that** the seat (20) and the coupling sleeve (22) are matched to one another in such a way that the coupling sleeve (22) can be radially displaced relative to the seat (20) in a plane (24) in which the seat (20) extends.

4. Gas filter device according to any of claims 1 to 3, **characterised in that** the coupling sleeve (22) is axially adjustably arranged on a coupling connection (26) which is arranged on the pressure connection (15).

5. Gas filter device according to claim 4, **characterised in that** the coupling sleeve (22) is pushed axially against the seat (20) using a pretensioning spring (29).

6. Gas filter device according to either claim 4 or claim 5, **characterised in that** the coupling sleeve (22) is arranged coaxially in the coupling connection (26).

7. Gas filter device according to any of claims 1 to 6, **characterised in that** the coupling connection (26) bears, radially on the outside, an axially acting damping ring (34).

8. Gas filter device according to any of claims 1 to 7, **characterised in that** the filter body (2) is held in a pivotable manner on the filter support (11), via a bracket (46), about a pivot axis (47) which extends transversely to the longitudinal central axis (4) of the filter body (2).

9. Gas filter device according to any of claims 1 to 8, **characterised in that** the filter body (2) has, on its axial end which faces the filter support (11) in the installed state, a star-shaped mount (51) for the connection piece (21).

10. Gas filter device according to any of claims 1 to 9, **characterised in that** the at least one rotary nozzle (7) is rotatably mounted on the connection piece (21) in an end region (54) which faces the filter support (11) in the installed state.

11. Gas filter device according to any of claims 1 to 10, **characterised in that** the at least one rotary nozzle (7) is rotatably axially supported on a journal (60) in an end region (59) which faces away from the filter support (11) in the installed state, which journal is arranged on an end disc (61) which axially closes the associated end of the filter body (2).

12. Gas filter device according to any of claims 1 to 11, **characterised in that** the seat (20) is bordered radially on the outside by a radially protruding annular flange (64) which has an inner cross section which increases as the axial distance from the seat (20) increases.

13. Gas filter device according to any of claims 1 to 12, **characterised in that** the coupling sleeve (22) has an end portion (65) which tapers towards an axial end (66) which bears axially on the seat (20) in the installed state.

14. Filter body for a gas filter device (1) according to any of claims 1 to 13.

## Revendications

1. Dispositif de filtration de gaz, en particulier un filtre à poussière,
- avec au moins un corps filtrant (2), dont le matériau filtrant (3) est disposé de façon annulaire dans la section transversale du corps filtrant (2) et dans lequel au moins une buse rotative (7) est disposée de manière rotative autour d'un axe central longitudinal (4) du corps filtrant (2) afin d'assurer le rétrolavage du matériau filtrant (3),
- avec au moins un support de filtre (11), au niveau duquel le corps filtrant (2) respectif est fixé à une extrémité axiale à l'état monté, et qui présente un raccord de pression (15) afin d'alimenter la buse rotative (7) respective avec un gaz de rétrolavage,
- dans lequel est prévu un dispositif d'accouplement (19), qui présente une surface d'appui (20) de forme annulaire au niveau d'une tubulure de raccordement (21) disposée au niveau du corps filtrant (2) et raccordée de manière à communiquer avec la buse rotative (7) respective,
- dans lequel le dispositif d'accouplement (19) présente un manchon d'accouplement (22), de forme annulaire dans sa section transversale, disposé au niveau du raccord de pression (15) et qui vient s'appliquer au niveau de la surface d'appui (20) à l'état monté, **caractérisé en ce que**
- le support de filtre (11) présente un orifice de sortie (14) du côté filtrée, qui communique avec une chambre intérieure (8) du corps filtrant (2),
- la surface d'appui (20) de la tubulure de raccordement (21) est axiale et s'étend de manière plane et orthogonalement par rapport à l'axe central longitudinal (4) du corps filtrant (2), de telle sorte que le manchon d'accouplement (22) vient s'appliquer axialement au niveau de la surface d'appui (20) à l'état monté.

2. Dispositif de filtration de gaz selon la revendication 1,
**caractérisé en ce que**
la surface d'appui (20) repose axialement à l'intérieur d'une section d'extrémité (23) axiale du corps filtrant (2).

3. Dispositif de filtration de gaz selon la revendication 1 ou 2,
**caractérisé en ce que**
la surface d'appui (20) et le manchon d'accouplement (22) sont ajustés l'un à l'autre de telle sorte que le manchon d'accouplement (22) peut, par rapport à la surface d'appui (20), être déplacé radialement dans un plan (24) dans lequel s'étend la surface d'appui (20).

4. Dispositif de filtration de gaz selon l'une des revendications 1 à 3,
**caractérisé en ce que**
le manchon d'accouplement (22) est disposé axialement de manière réglable au niveau d'une tubulure d'accouplement (26) disposée au niveau du raccord de pression (15).

5. Dispositif de filtration de gaz selon la revendication 4,
**caractérisé en ce que**
le manchon d'accouplement (22) est entraîné axialement contre la surface d'appui (20) avec un ressort de précontrainte (29).

6. Dispositif de filtration de gaz selon la revendication 4 ou 5,
**caractérisé en ce que**
le manchon d'accouplement (22) est disposé de manière coaxiale dans la tubulure d'accouplement (26).

7. Dispositif de filtration de gaz selon l'une des revendications 1 à 6,
**caractérisé en ce que**
la tubulure d'accouplement (26) porte radialement à l'extérieur une bague d'amortissement (34) agissant axialement.

8. Dispositif de filtration de gaz selon l'une des revendications 1 à 7,
**caractérisé en ce que**
le corps filtrant (2) est maintenu, par l'intermédiaire d'une suspension (46), au niveau du support de filtre (11) de manière pivotante autour d'un axe de pivotement (47) s'étendant transversalement par rapport à l'axe central longitudinal (4) du corps filtrant (2).

9. Dispositif de filtration de gaz selon l'une des revendications 1 à 8,
**caractérisé en ce que**
le corps filtrant (2) présente, en son extrémité axiale faisant face au support de filtre (11) à l'état monté, un dispositif de fixation (51) en étoile pour la tubulure de raccordement (21).

10. Dispositif de filtration de gaz selon l'une des revendications 1 à 9,
**caractérisé en ce que**
l'au moins une buse rotative (7) est agencée de manière rotative au niveau de la tubulure de raccordement (21) dans une zone d'extrémité (54) faisant face au support de filtre (11) à l'état monté.

11. Dispositif de filtration de gaz selon l'une des revendications 1 à 10,
**caractérisé en ce que**
l'au moins une buse rotative (7) vient s'appuyer axialement et de manière rotative au niveau d'un tourillon (60) dans une zone d'extrémité (59) opposée au support de filtre (11) à l'état monté, ledit tourillon étant disposé au niveau d'un disque d'extrémité (61) obturant axialement l'extrémité associée du corps filtrant (2).

12. Dispositif de filtration de gaz selon l'une des revendications 1 à 11,
**caractérisé en ce que**
la surface d'appui (20) est encastrée radialement à l'extérieur par une collerette annulaire (64) disposée radialement en saillie et qui présente une section transversale intérieure croissante au fur et à mesure que s'accroît l'écartement axial de la surface d'appui (20).

13. Dispositif de filtration de gaz selon l'une des revendications 1 à 12,
**caractérisé en ce que**
le manchon d'accouplement (22) présente une section d'extrémité (65) se rétrécissant vers une extrémité axiale (66) qui repose axialement sur la surface d'appui (20) à l'état monté.

14. Corps filtrant pour un dispositif de filtration de gaz (1) selon l'une des revendications 1 à 13.
